**Europäisches Patentamt**

**European Patent Office**

**Office européen des brevets**

(19)

(11) Veröffentlichungsnummer: **0 201 820 B1**

# EUROPÄISCHE PATENTSCHRIFT

(12)

(45) Veröffentlichungstag der Patentschrift: **06.03.91**

(51) Int. Cl.5: **B29C 41/20**, B29C 33/40, B29C 41/30

(21) Anmeldenummer: **86106073.9**

(22) Anmeldetag: **02.05.86**

(54) **Vorrichtung und Verfahren zum Umgiessen der Kanten von plattenförmigen Rohlingen.**

(30) Priorität: **08.05.85 DE 3516452**

(43) Veröffentlichungstag der Anmeldung:
**20.11.86 Patentblatt 86/47**

(45) Bekanntmachung des Hinweises auf die
Patenterteilung:
**06.03.91 Patentblatt 91/10**

(84) Benannte Vertragsstaaten:
**AT BE CH DE FR GB IT LI LU NL SE**

(56) Entgegenhaltungen:
EP-A- 0 081 671
AT-B- 303 571
DE-A- 2 937 605

(73) Patentinhaber: **Finkensiep, Gerd**
**In der Mutte 1**
**W-5810 Witten 3(DE)**

(72) Erfinder: **Finkensiep, Gerd**
**In der Mutte 1**
**W-5810 Witten 3(DE)**

(74) Vertreter: **Behrendt, Arne, Dipl.-Ing.**
**Yorckstrasse 62**
**W-4630 Bochum(DE)**

## Beschreibung

Die Erfindung betrifft eine Vorrichtung und ein Verfahren zum Umgießen der Kanten von plattenförmigen Rohlingen mit Kunststoff, insbesondere für die Herstellung von Küchenmöbelplatten.

Eine nach dem Stande der Technik (DE-A-29 37 6051 Seite 6, letzter Absatz und Siete 7 erster Absatz) bekannte Vorrichtung für den oben genannten Zweck weist eine einteilige, die Kanten des Rohlinges ringsum umgebende Form aus gummielastischem Werkstoff auf, zu den Kanten des Rohlinges einen mit dem Kunststoff auszugießenden Raum beläßt und im unmittelbar an die Kanten angrenzenden Bereich von oben und unten an dem Rohling anliegt, wobei diese Form mittels einer Spannvorrichtung von oben und unten gegen den Rohling anpreßbar ist.

Solche nach dem Stande der Technik bekannten Vorrichtungen haben den Nachteil, daß es wegen der Elastizität des Formmaterials außerordentlich schwierig ist, eine ausreichende Maßhaltigkeit der angegossenen Kante zu erzielen. Besondere Schwierigkeiten macht der Übergangsbereich zwischen der Oberfläche des Rohlinges und der angegossenen Kante. Beim Anpressen der Form gegen die Oberflächen des Rohlinges drücken sich nämlich die Kanten des Rohlinges meistens zu weit in das elastische Material der Form ein, so daß im Übergangsbereich eine sichtbare Stufe entsteht.

Es ist deshalb Aufgabe der Erfindung, die Vorrichtung nach dem Gattungsbegriff des Patentanspruches 1 dahingehend weiterzubilden, daß eine bessere Maßhaltigkeit der angegossenen Kante erreicht wird, insbesondere im Übergangsbereich zwischen der Oberfläche des Rohlinges und der angegossenen Kante.

Zur Lösung dieser Aufgabe schlägt die Erfindung ausgehend von der Vorrichtung nach dem Gattungsbegriff des Patentanspruches 1 vor, daß die Form einem C-förmigen Querschnitt mit oberem und unterem freien Schenkel aufweist, daß die Spannvorrichtung als geteilter Formkasten ausgebildet ist, dessen Teile die Form von unten, am Außenumfang und von oben abstützen wobei die freien Schenkel der Form senkrecht zur Ebene des Rohlinges zusammenpreßbar sind, daß in dem Formkasten oberhalb und unterhalb des Rohlinges Distanzelemente angeordnet sind, die den Bewegungsweg der Teile des Formkastens in Richtung auf den in der Form befindlichen Rohling begrenzen, und daß die Form und der Oberteil des Formkastens mit fluchtend angeordneten Einfüllöffnungen für den Kunststoff versehen sind.

Durch die praktisch lückenlose Abstützung der aus elastischem Material bestehenden Form nach allen Seiten hin, ergibt sich trotz der elastischen Nachgiebigkeit der Form eine ausgezeichnete Maßhaltigkeit der angegossenen Kante. Durch die erfindungsgemäß weiterhin vorgeschlagenen Distanzelemente oberhalb und unterhalb des Rohlinges wird verhindert, daß die am Rohling anliegenden Teile der Form zu stark zusammenge preßt und verformt werden. Hierdurch könnten sichtbare Stufen im Übergangsbereich zwischen der Oberfläche des Rohlinges und der angegossenen Kante zuverlässig vermieden werden.

Zweckmäßig ist das untere Distanzelement mit dem Unterteil des Formkastens verbunden und stützt mit seinem Außenrand die Innenkante des unteren Bereiches der Form ab. Hierdurch ergibt sich in besonders vorteilhafter Weise eine vollständig formschlüssige Abstützung der elastischen Form in dem Unterteil des Formkastens.

Das obere Distanzelement ist zweckmäßig als lösbar mit dem Rohling verbundene Platte ausgebildet, die sich mit ihrem Außenumfang an der Innenkante des oberen Bereiches der Form abstützt und auf diese Weise den Rohling in der Form zentriert. Die Befestigung dieser Platte an dem Rohling kann beispielsweise mit Klebeband, einem lösbaren Kleber oder auch durch Schrauben vorgenommen werden. Durch die Zentrierung in der Form wird sichergestellt, daß die angegossene Kante ringsum gleichmäßig stark wird.

Das Verfahren gemäß der Erfindung geht von einem bekannten Verfahren zum Umgießen der Kanten von plattenförmigen Rohlingen aus, bei welchem der Rohling in eine einteilig elastischen Form eingesetzt wird, die Form von oben und unten gegen den Rohling angepreßt wird der Hohlraum der Form mit flüssigem aushärtbarem Kunststoff gefüllt wird und nach dem Aushärten des Kunststoffes das fertige Teil aus der elastischen Form ausgeformt wird. Um bei einem derartigen Verfahren eine bessere Maßhaltigkeit der angegossenen Kanten zu erzielen, schlägt die Erfindung vor, daß der

Rohling beim Einsetzen in die elastische Form, die einen C-förmigen Querschnitt mit oberem und unterem freien Schenkel aufweist, mittels eines an seiner Oberseite lösbar befestigten Distanzelementes in der Form zentriert wird, daß die Form mit dem darin zentrierten Rohling formschlüssig in den mit einem Distanzelement versehenen Unterteil eines Formkastens eingesetzt wird, daß der Oberteil des Formkastens aufgesetzt wird und vor dem Eingießen des Kunststoffes beide Teile des Formkastens senkrecht zur Ebene des Rohlinges unter Zusammendrückung der am Rohling anliegenden freien Schenkel der Form zusammengepreßt werden, bis die Distanzelemente von oben und unten flächig an dem Rohling anliegen.

Das nach diesem Verfahren hergestellte Fertigteil hat eine ausgezeichnete Maßhaltigkeit und weist insbesondere im Übergangsbereich zwischen der Oberfläche des Rohlinges und der angegossenen Kante keinerlei Stufen auf.

Ein Ausführungsbeispiel der Erfindung wird im folgenden anhand der Zeichnung näher erläutert. Es zeigen:

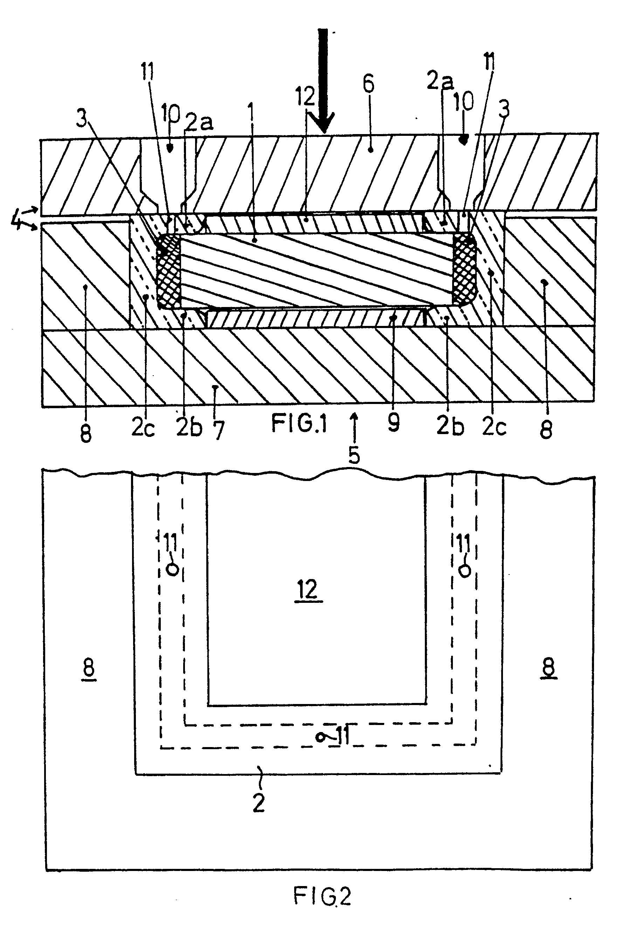

Fig. 1    einen senkrechten Schnitt durch den Rohling, die Form und den Formkasten;

Fig. 2    eine Draufsicht auf einen Teil des Unterteiles des Formkastens mit eingelegter Form.

In der Zeichnung ist der plattenförmige Rohling mit dem Bezugszeichen 1 bezeichnet. Er besteht beispielsweise aus einer beidseitig mit Kunststoff beschichteten Preßspanplatte mit genarbten Oberflächen. Der Rohling 1 ist in eine aus gummielastischem Material, beispielsweise aus Gummi bestehende, einteilige Form 2 eingesetzt. Diese Form 2 ist im Querschnitt C-förmig ausgebildet und weist einen oberen freien Schenkel 2a, einen unteren freien Schenkel 2b und ein die beiden freien Schenkel 2a und 2b verbindendes Mittelstück 2c auf und umgibt den Rohling 1 rahmenartig, wobei die beiden freien Schenkel 2a und 2b von oben und unten an dem Rohling 1 anliegen und zwischen dem Mittelstück 2c und den Kanten des Rohlinges 1 der mit Kunststoff auszugießende Hohlraum 3 verbleibt.

Die Form 2 ist in einem Formkasten 4 angeordnet, dessen Unterteil mit dem Bezugszeichen 5 und Oberteil mit dem Bezugszeichen 6 bezeichnet sind. Der Unterteil 6 weist eine Bodenplatte 7 und einen nach oben vorstehenden Rand 8 auf. Die Bodenplatte 7 und der Rand 8 stützen die eingelegte Form 2 von unten her und nach außen hin formschlüssig ab. Mit der Bodenplatte 7 ist weiterhin ein Distanzelement 9 verbunden, welches nach oben vorsteht und mit seinem Außenrand den Innenrand des unteren freien Schenkels 2b der Form 2 formschlüssig abstützt. Die Dicke des Distanzelementes 9 ist geringfügig kleiner als die des unteren freien Schenkels 2b.

Der Oberteil 6 des Formkastens 4 ist im wesentlichen als ein flacher Deckel ausgebildet, welcher von oben auf der elastischen Form 2 aufliegt, und zwar auf deren oberen freien Schenkel 2a. In dem Oberteil 6 des Formkastens 4 befinden sich vertikal verlaufende Einfüllöffnungen 10 für den einzufüllenden Kunststoff, welche mit entsprechenden Einfüllöffnungen 11 im oberen freien Schenkel 2a der Form 2 fluchten.

An der Oberseite des Rohlinges 1 ist mit Klebeband oder anderen geeigneten Befestigungsmitteln ein plattenförmiges Distanzelement 12 befestigt. Dieses plattenförmige Distanzelement 12 liegt mit seinem äußeren Rand formschlüssig am Innenrand des oberen freien Schenkels 2a der Form 2 an und zentriert den Rohling 1 in der Form 2 derart, daß der Hohlraum 3 nach allen Seiten hin

gleichmäßig breit ist. Die Dicke des Distanzelementes 12 ist wiederum etwas geringer als die des oberen freien Schenkels 2a der Form 2.

Wie aus der Zeichnung ersichtlich ist, kann der geschlossene Formkasten senkrecht zur Ebene des Rohlinges unter entsprechender Verformung der freien

Schenkel 2a und 2b zusammengepreßt werden, bis die Distanzelemente 9 und 12 von unten und oben an dem Rohling anliegen. Das Maß, um welches die freien Schenkel 2a und 2b der elastischen Form 2 zusammengepreßt werden können, ist durch die Dickendifferenzen zwischen den Distanzelementen 9 bzw. 12 und den freien Schenkeln 2a bzw. 2b bestimmt. Der Rand 8 des Unterteiles der Form ragt natürlich nur so weit nach oben, daß der Oberteil 6 der Form mindestens um die Summe dieser beiden Dickendifferenzen nach unten herabgedrückt werden kann.

Um das Zusammenpressen der beiden freien Schenkel 2a und 2b zu ermöglichen, ohne daß das elastische Material in den Bereich des Hohlraumes 3 ausweicht, sind die freien Schenkel 2a und 2b zu ihren freien Enden hin etwas verjüngt ausgebildet, so daß das elastische Material beim Zusammenpressen nach dorthin ausweichen kann.

Das Verfahren gemäß der Erfindung sieht vor, daß zunächst der Rohling 1 in die elastische Form 2 eingesetzt wird und in der Form 2 mittels des an seiner Oberseite festgelegten oberen Distanzelementes 12 zentriert wird. Die Form 2 wird dann zusammen mit dem eingesetzten, zentrierten Rohling 1 in den Unterteil 5 des Formkastens 4 eingesetzt, wobei die Bodenplatte 7, der Rand 8 und das Distanzelement 9 die elastische Form 2 nach allen Seiten hin formschlüssig abstützen. Dann wird der Oberteil 6 des Formkastens 4 aufgesetzt. Beide Teile 5 und 6 des Formkastens 4 werden senkrecht zur Ebene des Rohlinges 1 mittels einer nicht näher dargestellten Preßvorrichtung derart zusammengepreßt, daß die freien Schenkel 2a und 2b der Form 2 zusammengedrückt werden, bis die Distanzelemente 9 und 12 von unten und oben flächig an dem Rohling 1 anliegen. Dann wird der Hohlraum 3 mit einem flüssigen, aushärtbaren Kunststoff, vorzugsweise Polyurethan (PUR) gefüllt. Nach dem Aushärten des Kunststoffes wird der Formkasten 4 geöffnet und das fertige Teil aus der elastischen Form 2 ausgeformt.

## Ansprüche

1.   Vorrichtung zum Umgießen der Kanten von plattenförmigen Rohlingen (1) mit Kunststoff, insbesondere für die Herstellung von Küchenmöbelplatten, mit einer einteiligen, die Kanten des Rohlinges (1) ringsum umgebenden Form (2) aus gummielastischem Werkstoff, die die Kanten des Rohlinges (1) aufnimmt, zu den Kanten des Rohlinges (1) einen mit dem Kunststoff auszugießenden Raum beläßt und im unmittelbar an die Kanten angrenzenden Bereich von oben und unten an dem Rohling (1) anliegt, wobei diese Form mittels einer Spannvorrichtung von oben und unten gegen den Rohling (1) anpreßbar ist, dadurch gekennzeichnet, daß die Form (2) einen C- förmigen Querschnitt mit oberen und unteren freien Schenkel (2a, 2b) aufweist, daß die Spannvorrichtunng als geteilter Formkasten (4) ausgebildet ist, dessen Teile (5, 6) die Form (2) von unten, am Außenumfang und von oben abstützen wobei die freien Schenkel (2a, 2b) der Form senkrecht zur Ebene des Rohlinges (1) zusammenpreßbar sind, daß in dem Formkasten (4) oberhalb und unterhalb des Rohlinges (1) Distanzelemente (9, 12) angeordnet sind, die den Bewegungsweg der Teile (5, 6) des Formkastens (4) in Richtung auf den in der Form befindlichen Rohling (1) begrenzen, und daß die Form (2) und der Oberteil (6) des Formkastens (4) mit fluchtend angeordneten Einfüllöffnungen (10, 11) für den Kunststoff versehen sind.

2. Vorrichtung nach Anspruch 1, dadurch gekennzeichnet, daß das untere Distanzelement (9) mit dem Unterteil (5) des Formkastens (4) verbunden ist und mit seinem Außenrand die Innenkante des unteren Bereiches der Form (2) abstützt.

3. Vorrichtung nach den Ansprüchen 1 oder 2, dadurch gekennzeichnet, daß das obere Distanzelement (12) als lösbar mit dem Rohling (1) verbundene Platte ausgebildet ist, die sich mit ihrem Außenumfang an der Innenkante des oberen Bereiches der Form (2) abstützt und auf diese Weise den Rohling (1) in der Form zentriert.

4. Verfahren zum Umgießen der Kanten von plattenförmigen Rohlingen (1) unter Verwendung einer Vorrichtung nach den Ansprüchen 1 bis 3, bei welchem der Rohling (1) in eine einteilige elastische Form (2) eingesetzt wird, die Form (2) von oben und unten gegen den Rohling (1) angepreßt wird, der Hohlraum der Form (2) mit flüssigem, aushärtbarem Kunststoff gefüllt wird und nach dem Aushärten des Kunststoffes das fertige Teil aus der elastischen Form (2) ausgeformt wird, dadurch gekennzeichnet, daß der Rohling (1) beim Einsetzen in die elastische Form (2), die einen C- förmigen Querschnitt mit oberen un unteren freien Schenkel (2a, 2b) aufweist, mittels eines an seiner Oberseite lösbar befestigten Distanzelementes (12) in der Form (2) zentriert wird, daß die Form (2) mit dem darin zentrierten Rohling (1) formschlüssig in den mit einem Distanzelement (9) versehenen Unterteil (5) eines Formkastens (4) eingesetzt wird, daß der Oberteil (6) des Formkastens (4) aufgesetzt wird und daß vor dem Eingießen des Kunststoffes beide Teile des Formkastens (4) senkrecht zur Ebene des Rohlinges (1) unter Zusammendrückung der am Rohling (1) anliegenden freien Schenkel (2a, 2b) der Form (2) zusammengepreßt werden, bis die Distanzelemente (9, 12) von oben und unten flächig an dem Rohling (1) anliegen.

## Claims

1. Apparatus for surrounding the edges of panel-shaped blanks (1) with plastics material by a moulding procedure, in particular for the production of panels for kitchen furniture, comprising a one-piece mould (2) of rubber-elastic material which surrounds the edges of the blank (1) and which receives the edges of the blank (1) and which leaves a space to be filled with the plastics material, at the edges of the blank (1) and which bears against the blank (1) from above and below in the region immediately adjoining the edges, wherein said mould can be pressed against the blank (1) from above and below by means of a clamping device, characterised in that the mould (2) is of a C-shaped cross-section with upper and lower free limbs (2a, 2b), that the clamping device is in the form of a divided mould box (4), the portions (5, 6) of which support the mould (2) from below, at the outer periphery and from above, wherein the free limbs (2a, 2b) of the mould can be pressed together perpendicularly to the plane of the blank (1), that disposed in the mould box (4) above and below the blank (1) are spacer elements (9, 12) which delimit the travel of the portions (5,6) of the mould box (4) towards the blank (1) in the mould, and that the mould (2) and the top portion (6) of the mould box (4) are provided with aligned filling openings (10, 11) for the plastics material.

2. Apparatus according to claim 1 characterised in that the lower spacer element (9) is connected to the bottom portion (5) of the mould box (4) and with its outer edge supports the inner edge of the lower region of the mould (2).

3. Apparatus according to claim 1 or claim 2 characterised in that the upper spacer element (12) is in the form of a plate which is releasably connected to the blank (1) and which is supported with its outer periphery at the inner edge of the upper region of the mould (2) and in that way centres the blank (1) in the mould.

4. A process for surrounding the edges of panel-shaped blanks (1) by a moulding procedure using an apparatus according to claims 1 to 3 wherein the blank (1) is fitted into a one-piece resilient mould (2), the mould (2) is pressed against the blank (1) from above and below, the cavity of the mould (2) is filled with liquid hardenable plastics material and after hardening of the plastics material the finished member is removed from the resilient mould (2), characterised in that upon being fitted into the resilient mould (2) which is of a C-shaped cross-section with upper and lower free limbs (2a, 2b), the blank (1) is centered in the mould (2) by means of a spacer element (12) releasably secured to the top side of the blank, that the mould (2) with the blank (1) centered therein is positively fitted into the bottom portion (5) of a mould box (4), the bottom portion being provided with a spacer element (9), that the top portion (6) of the mould box (4) is put on, and that prior to the plastics material being poured into the mould both portions of the mould box (4) are pressed together perpendicularly to the plane of the blank (1), thus compressing the free limbs (2a, 2b) of the mould (2) which lie against the blank (1), until the spacer elements (9, 12) bear flat against the blank (1) from above and from below.


**Revendications**

1. Appareil pour le surmoulage des bords d'une ébauche (1) sous forme de plaque avec de la matière synthétique, en particulier pour la fabrication de panneaux de meubles de cuisine, au moyen d'une forme en une partie, entourant totalement les bords de l'ébauche (1), en un matériau ayant l'élasticité du caoutchouc, qui reçoit les bords de l'ébauche (1), laisse un espace à remplir de matière synthétique sur les bords de l'ébauche (1) et repose, dans la zone directement adjacente aux bords, du dessus et du dessous, sur l'ébauche (1), ladite forme pouvant être pressée au moyen d'un dispositif de serrage, du dessus et du dessous, contre l'ébauche (1),

caractérisé en ce que la forme (2) présente une section transversale en forme de C avec des branches libres supérieure et inférieure (2a, 2b), en ce que le dispositif de serrage a la forme d'un châssis divisé (4), dont les parties (5, 6) soutiennent la forme (2) du dessous, sur le pourtour externe et du dessus, les branches libres (2a, 2b) de la forme pouvant être pressées l'une vers l'autre perpendiculairement au plan de l'ébauche (1), en ce que dans le châssis (4) sont agencés, au dessus et en dessous de l'ébauche (1), des éléments d'écartement (9, 12) qui limitent le mouvement des parties (5, 6) du châssis (4) dans la direction de l'ébauche (1) se trouvant dans la forme et en ce que la forme (2) et la partie supérieure (6) du châssis (4) sont pourvues d'ouvertures de remplissage (10, 11) agencées en étant alignées, pour la matière synthétique.

2. Dispositif selon la revendication 1, caractérisé en ce que l'élément inférieur d'écartement (9) est relié au dessous (5) du châssis (4) et soutient, par son bord externe, le bord interne de la zone inférieure de la forme (2).

3. Appareil selon les revendications 1 ou 2, caractérisé en ce que l'élément supérieur d'écartement (12) est configuré comme une plaque reliée détachable à l'ébauche (1), qui s'appuie par son pourtour externe sur le bord interne de la zone supérieure de la forme (2) et centre ainsi de cette manière l'ébauche (1) dans la forme.

4. Procédé pour le surmoulage des bords d'ébauches (1) sous forme de plaques en utilisant un procédé selon les revendications 1 à 3 où l'ébauche (1) est placée dans une forme élastique en une partie (2), la forme (2) est pressée, du haut et du bas, contre l'ébauche (1), la cavité de la forme (2) est remplie d'une matière synthétique liquide, durcissable, et après durcissement de la matière synthétique, la pièce finie est démoulée de la forme élastique (2), caractérisé en ce que l'ébauche (1), à sa mise en place dans la forme élastique (2) qui présente une section transversale en forme de C avec des branches libres supérieure et inférieure (2a, 2b), est centrée au moyen d'un élément d'écartement (12) fixé à son côté supérieur de manière détachable dans la forme (2), en ce que la forme (2) avec l'ébauche (1) qui y est centrée, est placée par liaison de forme dans le dessous (5) pourvu d'un élément d'écartement (9) d'un châssis (4), en ce que le dessus (6) du châssis (4) est mis en place et en ce qu'avant d'y couler la matière synthétique, les deux parties du châssis (4) sont pressées l'une vers l'autre perpendiculairement au plan de l'ébauche (1) avec compression des branches libres (2a, 2b), de la forme (2) reposant contre l'ébauche (1), jusqu'à ce que les éléments d'écartement (9, 12) reposent à plat, du dessus et du dessous, contre l'ébauche (1).

FIG.1

FIG.2